# EUROPEAN PATENT APPLICATION

(11) **EP 4 800 943 A1**
(43) Date of publication of application: **02.09.2026**
(21) Application number: 26160561.2
(22) Date of filing: 25.02.2026
(51) Int. Cl.: H04B 10/299

(54) **OPTICAL MEDIA CONVERTER**

(30) Priority: 28.02.2025 US 202563765310 P
(71) Applicant: Cisco Technology, Inc., San Jose, CA 95134-1706 (US)
(72) Inventor: LIU, Fenghai, San Jose, 95134-1706 (US); MIKKELSEN, Benny P., San Jose, 95134-1706 (US)
(74) Representative: Noble, Nicholas

(57) **Abstract**

An optical media converter configured to convert an optical signal with a first modulation scheme to a second optical signal with a second modulation scheme. The optical media converter receives the optical signal and converts the optical signals into electrical signals corresponding to the optical signal with the first modulation scheme. A DSP in the optical media converter modifies the electrical signals to correspond with an optical signal with the second modulation scheme. The optical media converter generates the second optical signal with the second modulation scheme based on the modified electrical signals and transmits the second optical signal out of the optical media converter.

## Description

### CROSS-REFERENCE TO RELATED APPLICATIONS

This application claims benefit of co-pending United States provisional patent application Serial No. 63/765,310 filed February 28, 2025.

### TECHNICAL FIELD

Embodiments presented in this disclosure generally relate to an optical media converter. More specifically, embodiments disclosed herein relate to an optical media converter that converts an optical signal from one modulation scheme to a different modulation scheme using a digital signal processor (DSP).

### BACKGROUND

As optical signals travel through optical cables from one location to another location, the optical signal may lose quality or signal strength. To reduce the rate that the optical signal loses quality or signal strength, the optical signal may be converted from one modulation scheme to another modulation scheme that is better suited for traveling longer distances. An optical media converter may receive an optical signal with one modulation scheme and convert the optical signal into electrical signals, the electrical signals are processed in a DSP, and converted into a different set of electrical signals. These electrical signals are further converted into an optical signal with another modulation scheme. The optical media converter can do the optical signal conversion in the opposite direction as described above.

### BRIEF DESCRIPTION OF THE DRAWINGS

So that the manner in which the above-recited features of the present disclosure can be understood in detail, a more particular description of the disclosure, briefly summarized above, may be had by reference to embodiments, some of which are illustrated in the appended drawings. It is to be noted, however, that the appended drawings illustrate typical embodiments and are therefore not to be considered limiting; other equally effective embodiments are contemplated.
Figure 1A depicts a diagram of an optical media converter with an optical connection on both sides of the optical media converter, according to one embodiment.
Figure 1B depicts a diagram of an optical media converter with optical connection ports on one side of the optical media converter, according to one embodiment.
Figure 2 depicts a flowchart of an exemplary method for converting a first optical signal with a first modulation scheme to a second optical signal with a second modulation scheme, according to one embodiment.
Figure 3 depicts a diagram of data centers with optical media converters for transmitting and receiving optical signals, according to one embodiment.
Figure 4A depicts a diagram of two optics that are implemented into a different photonic integrated circuit (PIC) for an optical media converter, according to one embodiment.
Figure 4B depicts a diagram of an optics that is implemented into a PIC for an optical media converter, according to one embodiment.

To facilitate understanding, identical reference numerals have been used, where possible, to designate identical elements that are common to the figures. It is contemplated that elements disclosed in one embodiment may be beneficially used in other embodiments without specific recitation.

### DESCRIPTION OF EXAMPLE EMBODIMENTS

### OVERVIEW

One embodiment presented in this disclosure is an optical media converter that includes a first port configured to receive a first optical signal with a first modulation scheme. The optical media converter further includes a first optics configured to convert the first optical signal into first electrical signals. The optical media converter further includes a DSP configured to modify the first electrical signals from the first modulation scheme to a second modulation scheme where the first modulation scheme is different from the second modulation scheme. The optical media converter further includes a second optics configured to convert the modified electrical signals into a second optical signal with the second modulation scheme and a second port configured to transmit the second optical signal out of the optical media converter. Additional embodiments may include a method.

One embodiment presented in this disclosure is an optical media converter that includes a first port configured to receive a first optical signal with a first signal speed. The optical media converter further includes a photodetector configured to convert the first optical signal into first electrical signals. The optical media converter further includes a DSP configured to modify the first electrical signals from the first signal speed to a second signal speed where the first signal speed is different from the second signal speed. The optical media converter further includes a modulator configured to convert the modified electrical signals into a second optical signal with the second signal speed and a second port configured to transmit the second optical signal out of the optical media converter.

### EXAMPLE EMBODIMENTS

The present disclosure describes an optical media converter that can convert an optical signal from a first modulation scheme to a second modulation scheme without transmitting the corresponding electrical signals outside of the optical media converter. In various embodiments, the optical media converter described herein may be used to convert 1600GBASE-DR8 short reach optical signals into OIF 1600ZR+ optical signals for metro or long-haul transmission, which are designed to convert optical signals between different modulation schemes and/or optical interfaces. This is achieved by configuring a DSP in the optical media converter to modify the electrical signals corresponding to the optical signal with the first modulation scheme to electrical signals corresponding to a second optical signal with a second modulation scheme. As optical signals travel through optical cables from one location to another location, the transmitted distance of the optical signal may be limited by signal strength and modulation schemes. For instance, an optical signal with a short-range modulation scheme, including but not limited to Pulse Amplitude Modulation 4-level (PAM-4), may transmit a few kilometers, while other modulation schemes, including but not limited to 16-level Quadrature Amplitude Modulation (16-QAM), with coherent detection may transmit a few hundred kilometers. The PAM-4 optical signal may be limited to distances within a data center or data-center campus. In order to reach to data centers further apart, the optical signal may be converted to another modulation scheme, such as 16-QAM, that is better suited for traveling longer distances. Optical media converters may employ two optical transceiver modules connected electrically in a back-to-back configuration. This electrical connection often involves multiple lanes of high-speed electrical signals being transmitted between the optical transceiver modules, which consumes significant power. Some optical transponder systems include a client optical module, a line optical module, and an intervening framer or a gearbox. Such systems often require two or three separate DSPs (one in each module and/or one in the framer), leading to high power consumption and complexity. In some instances, the optical media converter described herein includes two optics for two different modulation schemes. By including optics for different modulation schemes and a DSP in one optical media converter, the optical media converter can convert an optical signal with a first modulation scheme into a second optical signal with a second modulation that is different from the first modulation scheme without leaving the optical media converter. This configuration consumes less power than connecting one optical transceiver module to another optical transceiver module in order to convert between modulation schemes.

In some instances, the optical media converter receives an optical signal from other equipment, such as switches or routers, at a first location (such as a data center) with a first modulation scheme, converts the optical signal into a second optical signal with a second modulation scheme, and transmits the second optical signal to a second location (such as a second data center). The optical media converter may include a first optics with a photodetector (or photodetectors) that converts the first optical signal into electrical signals. The optical media converter may include a DSP that modifies the electrical signals by reamplifying, reshaping, retiming the received electrical signals, compensating impairments from the first optical signal, correcting errors from the first optical signal, and generating electrical signals for modulating another optical signal with a modulation scheme that is different from the first modulation scheme. The DSP may use the modified electrical signals to drive a modulator (or multiple modulators) in a second optics in the optical media converter, along with a first laser (or multiple lasers) in the optical module, to generate a second optical signal based on the modified electrical signals. The second optical signal may be a different modulation scheme or different modulation speed from the first optical signal. For example, the first optical signal (which may have a PAM-4 modulation scheme) is converted into the second optical signal with a 16-QAM modulation scheme. The second optical signal may be transmitted out of the optical module to a second location (such as another data center) through a second optical connection port. In some instances, the first optical connection port is on an opposite side of the optical module from the second optical connection port. In some instances, the first optical connection port is on the same side of the optical module as the second optical connection port.

In some embodiments, the systems provide several technical advantages. For example, by having two optics with different modulation schemes and a DSP in one optical media converter, the optical signal may be converted between modulation schemes more efficiently. The optical signal with one modulation scheme may enter the optical media converter, be converted into electrical signals, and modified to generate new optical signals with a different modulation scheme without leaving the optical media converter. Since the high-speed electrical signals are processed inside the optical media converter module without going through electrical connectors, the systems also greatly improve operation reliability and reduce field failure rate and maintenance cost. Furthermore, because the high-speed electrical signals remain within the optical media converter and do not pass through external electrical connectors between modules, the requirement for high-power RF signals to overcome connector-related insertion loss is eliminated, further reducing power consumption. By eliminating high-speed electrical connectors and by the optical media converter including a DSP, the optical media converter can be packaged into small form factor modules. Beyond efficiency, providing flexibility for optical connections on both sides of the optical module or all the optical connections on one side of the optical module offers substantial benefits for installation and maintenance in different racks. This configuration enables greater flexibility in fiber routing, allowing client-side and line-side optical fibers to be managed and accessed independently from different sides of the host system. This separation simplifies cable management, reduces congestion, and eases technician efforts during initial installation, upgrades, and troubleshooting, leading to improved operational efficiency. By eliminating external electrical connectors, the optical media converter is less susceptible to signal degradation or failure caused by mechanical vibrations or improper seating during equipment transportation and installation.

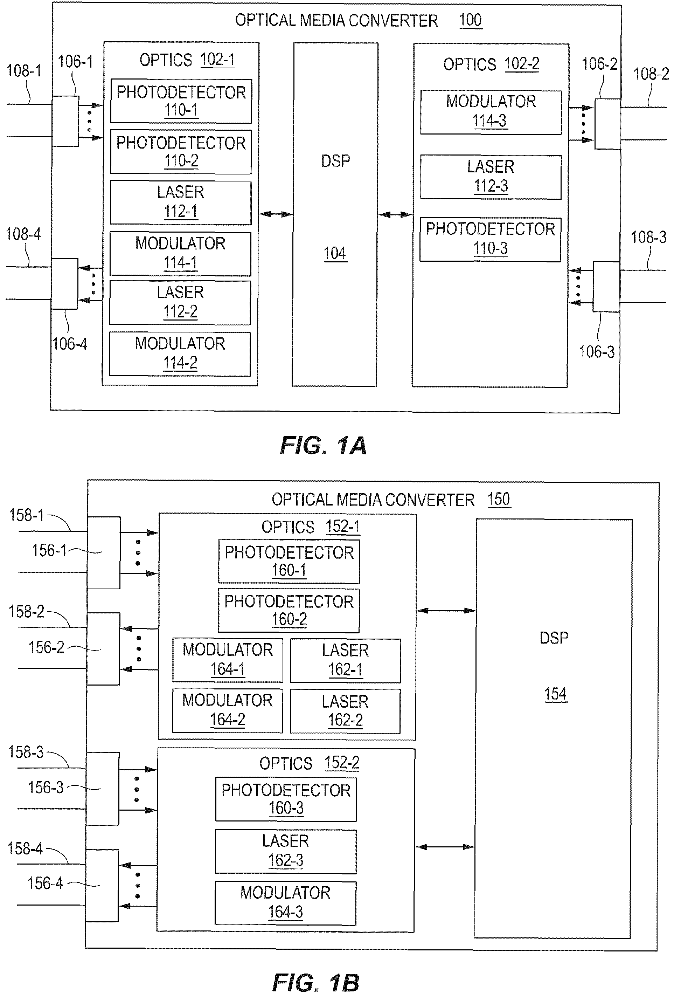

Figure 1A depicts an optical media converter 100 that includes optics 102-1 and 102-2, a DSP 104, and optical connection ports 106-1 through 106-4. The optics 102-1 includes photodetectors 110-1 and 110-2 for converting an optical signal with a first modulation scheme from the optical connection port 106-1 into an electrical signal, modulators 114-1 and 114-2 for converting an electrical signal into an optical signal, and lasers 112-1 and 112-2 to be used with the modulators 114-1 and 114-2 to generate an optical signal with the first modulation scheme. The optics 102-1 may be integrated into a PIC that includes a combination of the photodetectors 110-1 and 110-2, the lasers 112-1 and 112-2, and the modulators 114-1 and 114-2. In one embodiment, the optics 102-1 is implemented with discrete optical components for the photodetectors 110-1 and 110-2, the lasers 112-1 and 112-2, and the modulators 114-1 and 114-2. Similarly, the optics 102-2 include a photodetector 110-3, modulator 114-3, and laser 112-3 to detect and transmit optical signals with a second modulation scheme. The DSP 104 may be implemented in an electronic IC. The DSP 104 receives electrical signals and modifies the electrical signals that correspond to an optical signal with a first modulation scheme (such as PAM-4) into electrical signals that correspond to an optical signal with a second modulation scheme (such as 16-QAM). The first modulation scheme may be different from the second modulation scheme. For example, an optical signal with the first modulation scheme may be suitable for short reach fiber transmission, while with the second modulation scheme is more suitable for metro or long-haul fiber transmission. The DSP 104 may modify the electrical signals by amplifying the magnitude of the signals, changing the shape of the signals, changing the timing of the signals, compensating optical signal impairments, or correcting errors. In certain configurations, the optical connection ports 106-1 and 106-4 are on an opposite side of the optical media converter 100 from the optical connection ports 106-2 and 106-3. This configuration of the optical connection ports 106-1 through 106-4 allows easy installation of the optical media converters into certain transponder system chassis.

The optical media converter 100 may receive a first optical signal from other equipment such as network switches or routers at a first location (such as a data center or an organization's building) from an optical fiber 108-1 that is connected to the optical connection port 106-1. The first optical signal may be a combination of optical signals as indicated by the ellipses between the optical connection port 106-1 and the optics 102-1. Similarly, the other ellipses in Figure 1A indicate optical signals that are entering or leaving the optical media converter 100, which may be a combination of optical signals. The first optical signal is received from the optical connection port 106-1 to the optics 102-1 to convert the first optical signal into first electrical signals through the photodetectors 110-1 and 110-2. In one embodiment, the first optical signal has a first modulation scheme such as PAM-4. The optics 102-1 may transmit the first electrical signals to the DSP 104, so that the first electrical signals may be modified to second electrical signals. In one embodiment, the DSP 104 modifies the first electrical signals such that the first electrical signals are converted into the second electrical signals by reamplifying, reshaping, retiming the first electrical signals, modifying grouping of bits represented by the first electrical signals, compensating impairment from the first optical signal, or correcting errors from the first optical signal. The DSP 104 may use the second electrical signals with a second modulation scheme such as 16-QAM to drive a modulator in the optics 102-2 to generate a second optical signal with the second modulation scheme that is based on the second electrical signals. Alternatively, the second electrical signals may have the same modulation scheme as the first electrical signals with a different signal speed. The optics 102-2 may generate the second optical signal with the second modulation scheme using the modulator 114-3 that modulates the light emitted from the laser 112-3, respectively, based on the second electrical signals. In one embodiment, the second modulation scheme is different from the first modulation scheme. The second optical signal with the second modulation scheme may be transmitted out of the optical media converter 100 through an optical connection port 106-2 that is connected to an optical fiber 108-2. The optical fiber 108-2 may be connected to a second location (such as another data center or another organization's building).

The optical media converter 100 may receive a third optical signal with a second modulation scheme (such as 16-QAM) that is transmitted from an optical fiber 108-3 that is connected to the second location. The optical fiber 108-3 connects the third optical signal to the optical media converter 100 through an optical connection port 106-3. The third optical signal may be received by the photodetector 110-3 in the optics 102-2 to be converted into third electrical signals. The optics 102-2 may transmit the third electrical signals to the DSP 104 to modify the third electrical signals into fourth electrical signals such that the fourth electrical signals may be used to generate a fourth optical signal with the first scheme (such as PAM-4). The DSP 104 may use the fourth electrical signals to drive the modulators 114-1 and 114-2 in the optics 102-1 such that the modulators 114-1 and 114-2 modulates the light emitted from the lasers 112-1 and 112-2 in the optical media converter 100 to generate the fourth optical signal with the first modulation scheme. The optics 102-1 transmits the fourth optical signal to an optical connection port 106-4 and out of the optical media converter 100 through an optical fiber 108-4 that is connected to the optical connection port 106-4. The fourth optical signal may be transmitted through the optical fiber 108-4 to other equipment such as network switches or routers at the first location.

In addition to modulation scheme conversion, the optical media converter 100 illustrated in Figure 1A may perform signal speed conversion. In such an embodiment, the optical connection port 106-1 receives a first optical signal with a first signal speed and is transferred to the optics 102-1. The optics 102-1 converts the first optical signal into first electrical signals (e.g., using the photodetectors 110-1 and 110-2). The DSP 104 receives the first electrical signals, modifies the first electrical signals from a first signal speed to a second signal speed, and drives modulators (e.g., the modulator 114-3) in the optics 102-2 to generate a second optical signal with the second signal speed. The second optical signal may be transmitted out of the optical media converter 100 via the optical connection port 106-2. For the return path, the third port 106-3 receives a third optical signal with the second signal speed. The optics 102-2 converts the third optical signal into second electrical signals, which the DSP 104 modifies from the second signal speed to the first signal speed. The DSP 104 then drives a plurality of modulators (e.g., modulators 114-1 and 114-2) in the first optics 102-1 to generate a fourth optical signal with the first signal speed for transmission via the fourth port 106-4.

As used herein, 'signal speed' refers to the rate at which data is transmitted or processed, which may include the bit rate (e.g., bits per second), the symbol rate or baud rate (e.g., symbols per second), or the clock frequency of the electrical or optical signals. The DSP 104 may be configured to perform signal speed conversion by, for example, implementing a gearbox or framer function. This may involve mapping data from a first number of parallel electrical lanes operating at a first bit rate to a second number of parallel electrical lanes operating at a second bit rate, or adjusting the symbol rate to accommodate the bandwidth requirements of a specific modulation scheme (e.g., converting between a high-baud-rate short-reach signal and a different-baud-rate long-haul coherent signal).

Figure 1B depicts an optical media converter 150 that includes optics 152-1 and 152-2, a DSP 154, and optical connection ports 156-1 through 156-4 that allow for optical signals to enter or leave the optical media converter 150. The optics 152-1 include photodetectors 160-1 and 160-2, lasers 162-1 and 162-2, and modulators 164-1 and 164-2. The optics 152-2 include photodetector 160-3, laser 162-3, and modulator 164-3. The optics 152-1 and 152-2 as well as the DSP 154 have functions similarly to the optics 102-1, 102-2, and DSP 104, respectively. Unlike the optical media converter 100 that is depicted in Figure 1A, each of the optical connection ports 156-1 through 156-4 are on the same side of the optical media converter 150. This configuration allows substantially all fiber access from one side, such as on the faceplate side of a transponder system chassis. The optical media converter 150 may receive a first optical signal with a first modulation scheme (such as PAM-4) from other equipment such as network switches or routers at a first location through an optical fiber 158-1 that is connected to the optical connection port 156-1. The first optical signal may be received by the photodetectors 160-1 and 160-2 in the optics 152-1 to be converted into first electrical signals. The first electrical signals may be transmitted to the DSP 154 to be modified into second electrical signals such that the second electrical signals may be used to generate a second optical signal with a second modulation scheme (such as 16-QAM). The first modulation scheme may be different from the second modulation scheme. Alternatively, the second electrical signals may be used to generate a second optical signal with the first modulation scheme, but with a different signal speed. The DSP 154 may use the second electrical signals to drive the modulator 164-3 in the optics 152-2 such that the modulator 164-3 modulates the light emitted from the laser 162-3, in the optical media converter 150 to generate the second optical signal with the second modulation scheme or with the different signal speed. The second optical signal may be transmitted out of the optical media converter 150 through an optical fiber 158-4 that is connected to the optical connection port 156-4.

In another example, the optical media converter 150 may receive a third optical signal with the second modulation scheme from the second location through an optical fiber 158-3 that is connected to the optical connection port 156-3. The third optical signal may be received by the photodetector 160-3 in the optics 152-2 to be converted into third electrical signals. The third electrical signals may be transmitted to the DSP 154 to be modified into fourth electrical signals such that the fourth electrical signals may be used to generate a fourth optical signal with the first modulation scheme. The DSP 154 may use the fourth electrical signals to drive the modulators 164-1 and 164-2 in the optics 152-1 such that the modulators 164-1 and 164-2 modulates the light emitted from the lasers 162-1 and 162-2 in the optical media converter 150 to generate the fourth optical signal with the first modulation scheme. The fourth optical signal may be transmitted out of the optical media converter 150 through an optical fiber 158-2 that is connected to the optical connection port 156-2.

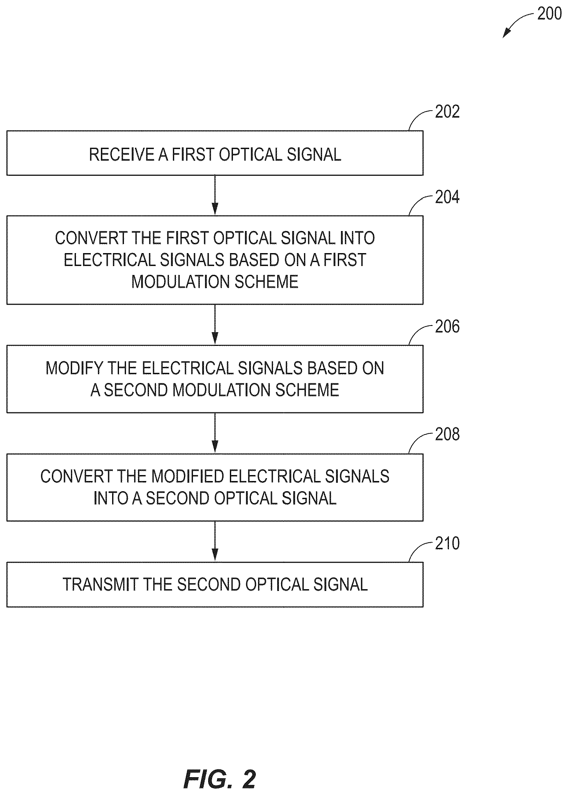

Figure 2 depicts a flowchart of an exemplary method 200 for converting a first optical signal with a first modulation scheme to a second optical signal with a second modulation scheme, according to one embodiment. At block 202, an optical media converter (such as the optical media converter 100 depicted in Figures 1A) receives a first optical signal through a first optical connection port (such as the optical connection ports 106-1 in Figure 1A) that is connected to an optical fiber (such as the optical fibers 108-1 in Figure 1A). The first optical signal may be generated by a first type of modulation scheme (such as PAM-4). The first optical signal may be transmitted to optics in the optical media converter (such as the optics 102-1 depicted in Figure 1A). The optics may include photodetectors (such as the photodetectors 110-1 and 110-2 depicted in Figure 1A) such that, at block 204, the photodetector can convert the first optical signal into first electrical signals.

The first electrical signal may be transmitted to a DSP in the optical media converter (such as the DSP 104 depicted in Figure 1A) to be modified. At block 206, the DSP modifies the first electrical signals based on a second modulation scheme (such as 16-QAM) or a different signal speed. The DSP may convert the first electrical signals into modified electrical signals by reamplifying (e.g., amplifying the magnitude) of the signals, reshaping (e.g., changing the shape) of the signals, retiming (e.g., changing the timing) of the signals, or generating electrical signals for modulating an optical signal using a modulation scheme that is different from the first modulation scheme. Another optics may include a modulator (such as the modulator 114-3 depicted in Figure 1A) and laser (such as the laser 112-3 depicted in Figure 1A) that are used to generate an optical signal from an electrical signal. The modified electrical signals by the DSP are used to drive the modulator and the modulator may modulate the light emitted from the laser in the optical media converter such that, at block 208, the modulator and the laser convert the modified electrical signals into a second optical signal with the second modulation scheme or the different signal speed.

At block 210, the optical media converter transmits the second optical signal out of the optical media converter.

By having a DSP and multiple optics inside of the optical media converter configured for different modulation schemes or different signal speeds, optical signals that enter the optical media converter through the first optical connection port may be converted from one modulation scheme (such as PAM-4) to a different modulation scheme (such as 16-QAM), or from one signal speed to a different signal speed, without leaving the optical media converter.

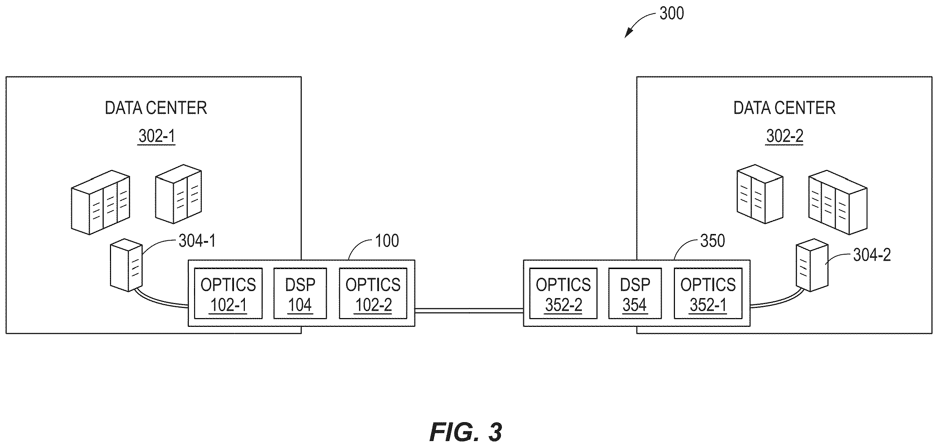

Figure 3 depicts an environment 300 with data centers 302-1 and 302-2. Each of the data centers 302-1 and 302-2 includes racks 304-1 and 304-2, respectively. The racks 304-1 and 304-2 may be servers, switches, or routers that are used for optical communication (such as between the data centers 302-1 and 302-2). In an embodiment, the optical media converter 100 depicted in Figure 1A is connected to the rack 304-1. Optical connection ports (such as the optical connection ports 106-1 and 106-4 depicted in Figure 1A) that are associated with the optics 102-1 of the optical media converter 100 while the optical connection ports (such as the optical connection ports 106-2 and 106-3 depicted in Figure 1A) that are associated with the optics 102-2 are connected to optical fibers that extend out of the data center 302-1. The data center 302-1 may communicate with the data center 302-2 through the optical media converter 100 and 350. The rack 304-1 may transmit a first optical signal with a first modulation scheme to the optical media converter 100 to be converted into a second optical signal with a second modulation scheme that is different from the first modulation scheme. The optical media converter 100 may receive the first optical signal through one of the optical connection ports on the optical media converter 100. The first optical signal may be converted into first electrical signals through photodetectors (such as the photodetectors 110-1 and 110-2 depicted in Figure 1A) in the optics 102-1. The first electrical signals may be transmitted to the DSP 104 such that the DSP 104 generates second electrical signals for the second optical signal with the second modulation scheme by modifying the first electrical signals. The DSP 104 may use the second electrical signals to drive a modulator (such as the modulator 114-3 depicted in Figure 1A) that is in the optics 102-2 such that the modulator modulates the light emitted from a laser (such as the laser 112-3 depicted in Figure 1A) in the optical media converter 100 to generate the second optical signal. The optics 102-2 may transmit the second optical signal from the optical media converter 100 to an optical fiber (such as an optical fiber extending from the data center 302-1 to the data center 302-2). By converting the first optical signal with the first modulation scheme to the second optical signal with the second modulation scheme, the first optical signal may be converted from a short-range modulation scheme to a long-range modulation scheme for long-range fiber transmission.

Optics 352-2 in optical media converter 350 may receive the second optical signal with the second modulation scheme through an optical fiber from the data center 302-1 and convert the second optical signal into a third optical signal with a third modulation scheme. The optical media converter 350 may receive the second optical signal through an optical connection port on the optical media converter 350. The second optical signal may be converted into third electrical signals through a photodetector in the optics 352-2. The third electrical signals may be transmitted to the DSP 354 such that the DSP 354 generates fourth electrical signals for the third optical signal with the third modulation scheme by modifying the third electrical signals. The DSP 354 may use the fourth electrical signals to drive a modulator that is in the optics 352-1 such that the modulator modulates the light emitted from a laser in the optical media converter 350 to generate the third optical signal. The optics 352-1 may transmit the third optical signal from the optical media converter 350 to the rack 304-2. In one embodiment, the third modulation scheme is the same modulation scheme as the first modulation scheme. In one embodiment, the third modulation scheme is different from the second modulation scheme or the first modulation scheme. The data center 302-2 may transmit optical signals back to the data center 302-1 using a similar process of converting optical signals from the rack 304-2 to the rack 304-1. A similar process may be done for converting a first optical signal with a first signal speed to a second optical signal with a second signal speed that is different from the first signal speed where the first optical signal and the second optical signal have the same modulation scheme.

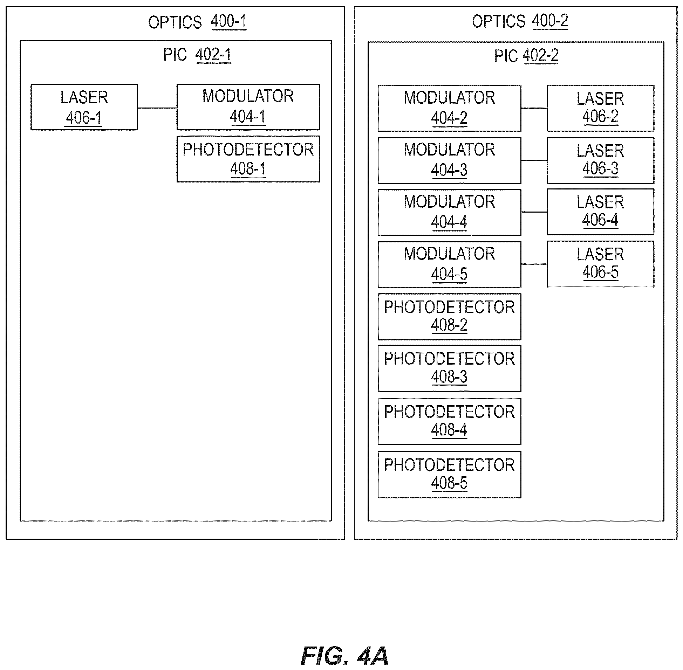

Figure 4A depicts a diagram of optics 400-1 (such as the optics 102-1 or 102-2 depicted in Figure 1A) that includes PIC 402-1 and optics 400-2 that includes PIC 402-2. The PIC 402-1 includes a photodetector 408-1 that is used for generating electrical signals from an optical signal. The PIC 402-2 includes photodetectors 408-2 through 408-5. The PIC 402-1 includes a modulator 404-1 that is used for generating an optical signal from electrical signals transmitted from a DSP (such as the DSP 104 depicted in Figure 1A). The PIC 402-2 includes modulators 404-2 through 404-5. The number of modulators in each of the PICs 402-1 and 402-2 varies based on the modulation scheme and the signal speed that the optics is designed for. For example, if the PIC 402-1 is designed for a longer-range modulation scheme (such as 16QAM), the PIC 402-1 includes the modulator 404-1. In comparison, if the PIC 402-2 is designed for a shorter-range modulation scheme (such as PAM-4) the PIC 402-2 includes modulators 404-2 through 404-5. Another example, if the PIC 402-1 is designed for a higher signal speed than the PIC 402-2, the PIC 402-1 may include less modulators than the PIC 402-2. Other modulation schemes and signal speeds may use more or less modulators than depicted in the PIC 402-1 or 402-2. Each of the modulators 404-1 through 404-5 are configured to modulate the light emitted from lasers 406-1 through 406-5, respectively, according to electrical signals received from the DSP. In an embodiment, each of the lasers 406-1 through 406-5 are outside of the PICs 402-1 and 402-2. In an exemplary embodiment, each of the lasers 406-1 through 406-5 are on the PICs 402-1 and 402-2, respectively.

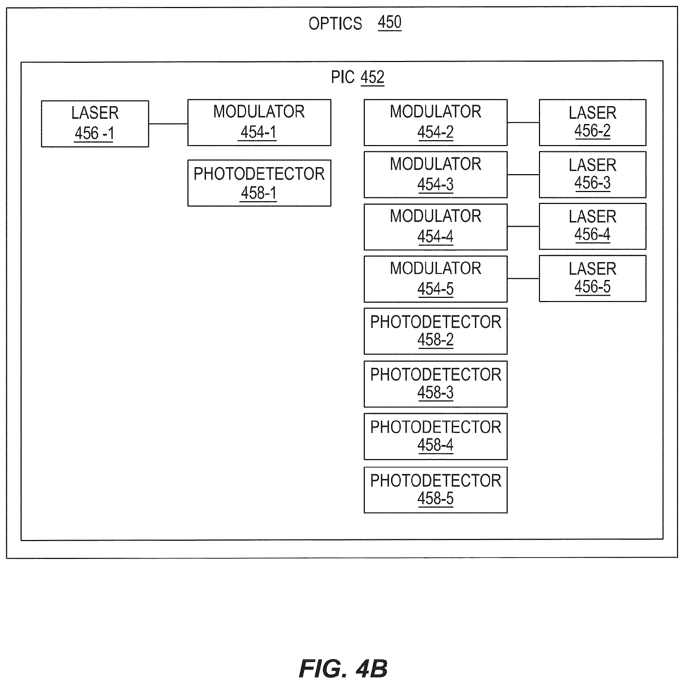

Figure 4B depicts a diagram of optics 450 (such as the optics 102-1 or 102-2 depicted in Figure 1A) that includes a PIC 452 for an optical media converter (such as the optical media converter 100 depicted in Figure 1A). The PIC 452 includes modulators 454-1 through 454-5, lasers 456-1 through 456-5, and photodetectors 458-1 through 458-5. The photodetector 458-1 converts a first optical signal with a first modulation scheme or first signal speed into electrical signals that are transferred to a DSP (such as the DSP 104 depicted in Figure 1A). The DSP modifies the electrical signals for generating a second optical signal with a second modulation scheme or second signal speed. The modulators 454-2 through 454-5 modulate the light emitted from the lasers 456-2 through 456-5 based on the modified electrical signals to generate the second optical signal. Similarly, the photodetectors 458-2 through 458-5 convert a third optical signal with the second modulation scheme or second signal speed into second electrical signals for the DSP to modify. The modulator 454-1 and the laser 456-1 converts the modified second electrical signals into a fourth optical signal with the first modulation scheme or the first signal speed. This configuration conserves space used in the optical media converter by compacting PICs (such as the PICs 402-1 and 402-2 depicted in Figure 4A) with different modulation schemes or different signal speeds into a single PIC.

In the current disclosure, reference is made to various embodiments. However, the scope of the present disclosure is not limited to specific described embodiments. Instead, any combination of the described features and elements, whether related to different embodiments or not, is contemplated to implement and practice contemplated embodiments. Additionally, when elements of the embodiments are described in the form of "at least one of A and B," or "at least one of A or B," it will be understood that embodiments including element A exclusively, including element B exclusively, and including element A and B are each contemplated. Furthermore, although some embodiments disclosed herein may achieve advantages over other possible solutions or over the prior art, whether or not a particular advantage is achieved by a given embodiment is not limiting of the scope of the present disclosure. Thus, the aspects, features, embodiments and advantages disclosed herein are merely illustrative and are not considered elements or limitations of the appended claims except where explicitly recited in a claim(s). Likewise, reference to "the invention" shall not be construed as a generalization of any inventive subject matter disclosed herein and shall not be considered to be an element or limitation of the appended claims except where explicitly recited in a claim(s).

## Claims

1. An optical media converter comprising:
a first port configured to receive a first optical signal with a first modulation scheme;
a first optics configured to convert the first optical signal into first electrical signals;
a digital signal processor (DSP) configured to modify the first electrical signals from the first modulation scheme to a second modulation scheme to produce modified electrical signals, wherein the first modulation scheme is different from the second modulation scheme;
a second optics configured to convert the modified electrical signals into a second optical signal with the second modulation scheme; and
a second port configured to transmit the second optical signal out of the optical media converter.

2. The optical media converter of claim 1, wherein the second optical signal with the second modulation scheme is capable of traveling a longer distance than the first optical signal with the first modulation scheme.

3. The optical media converter of any preceding claim, wherein the optical media converter further comprises:
a third port configured to receive a third optical signal with the second modulation scheme, wherein the second optics is configured to convert the third optical signal into second electrical signals, wherein the DSP is configured to modify the second electrical signals into second modified electrical signals by at least one of: reamplifying, reshaping, retiming the second electrical signals, converting the second electrical signals from a first signal speed to a second signal speed, compensating impairments from the third optical signal, or correcting errors from the third optical signal, wherein the first optics is configured to convert the second modified electrical signals into a fourth optical signal with the first modulation scheme; and
a fourth port configured to transmit the fourth optical signal with the first modulation scheme, wherein the third optical signal is capable of traveling a longer distance than the fourth optical signal,
optionally wherein the first optics further comprises a plurality of photodetectors, a plurality of lasers, and a plurality of modulators, wherein the plurality of modulators modulates the plurality of lasers based on the second modified electrical signals to convert the second electrical signals to the fourth optical signal,
further optionally wherein the second optics further comprises a second plurality of photodetectors, a second plurality of lasers and a second plurality of modulators, wherein the number of the plurality of photodetectors is different from the number of the second plurality of photodetectors, wherein the number of the plurality of lasers is different from the number of the second plurality of lasers, and wherein the number of the plurality of modulators is different from the number of the second plurality of modulators.

4. The optical media converter of any preceding claim, wherein the first optics comprises a first photonic integrated circuit (PIC), wherein the second optics comprises a second PIC that is different from the first PIC, and wherein the DSP is electrically connected to the first PIC and the second PIC.

5. The optical media converter of any preceding claim, wherein the first optics and the second optics share a PIC, wherein the PIC comprises a first photodetector, a first plurality of modulators, and a first plurality of lasers for the first modulation scheme, wherein the PIC comprises a second photodetector, a second plurality of modulators, and a second plurality of lasers for the second modulation scheme, and wherein the DSP is electrically connected to the PIC.

6. A method comprising:
receiving, by an optical media converter, a first optical signal with a first modulation scheme;
converting the first optical signal into first electrical signals;
modifying the first electrical signals from the first modulation scheme to a second modulation scheme to produce modified electrical signals, wherein the first modulation scheme is different from the second modulation scheme; and
converting the modified electrical signals into a second optical signal with the second modulation scheme.

7. The method of claim 6, wherein the second optical signal with the second modulation scheme is capable of traveling a longer distance than the first optical signal with the first modulation scheme.

8. The method of claim 6 or 7, wherein the method further comprises:
receiving, by the optical media converter, a third optical signal with the second modulation scheme;
converting the third optical signal into second electrical signals with the second modulation scheme;
modifying the second electrical signals from the second modulation scheme to second modified electrical signals with the first modulation scheme by at least one of: reamplifying, reshaping, retiming the second electrical signals, converting the second electrical signals from a first signal speed to a second signal speed, compensating impairments from the third optical signal, or correcting errors from the third optical signal;
converting the second modified electrical signals to a fourth optical signal with the first modulation scheme; and
transmitting the fourth optical signal, wherein the third optical signal is capable of traveling a longer distance than the fourth optical signal,
optionally wherein converting the second modified electrical signals to the fourth optical signal comprises driving a modulator configured to modulate the fourth optical signal based on the second modified electrical signals.

9. The method of any of claims 6 to 8, wherein converting the modified electrical signals into the second optical signal further comprises driving a modulator configured to generate the second optical signal based on the modified electrical signals,
optionally wherein converting the second modified electrical signals into the second optical signal further comprises modulating, by the modulator, light emitted from a laser to convert the modified electrical signals into the second optical signal.

10. An optical media converter comprising:
a first port configured to receive a first optical signal with a first signal speed;
a photodetector configured to convert the first optical signal into first electrical signals;
a digital signal processor (DSP) configured to modify the first electrical signals from the first signal speed to a second signal speed to produce modified electrical signals, wherein the first signal speed is different from the second signal speed;
a modulator configured to convert the modified electrical signals into a second optical signal with the second signal speed; and
a second port configured to transmit the second optical signal out of the optical media converter.

11. The optical media converter of claim 10, wherein a modulation scheme of the first optical signal is the same as a modulation scheme of the second optical signal.

12. The optical media converter of claim 1o or 11, wherein the optical media converter further comprises:
a third port configured to receive a third optical signal with the second signal speed;
a second photodetector is configured to convert the third optical signal into second electrical signals, wherein the DSP is configured to modify the second electrical signals by converting the second electrical signals from the second signal speed to the first signal speed to produce modified second electrical signals;
a plurality of modulators configured to convert the modified second electrical signals to a fourth optical signal with the first signal speed; and
a fourth port configured to transmit the fourth optical signal, wherein a modulation scheme of the third optical signal is the same as a modulation scheme of the fourth optical signal,
optionally wherein the optical media converter further comprises a plurality of lasers configured to be modulated by the plurality of modulators to convert the modified second electrical signals to the fourth optical signal.

13. The optical media converter of any of claims 10 to 12, wherein the optical media converter further comprises a laser configured to be modulated by the modulator to convert the modified electrical signals to the second optical signal.

14. The optical media converter of any of claims 1o to 13, wherein the optical media converter further comprises:
a first photonic integrated circuit (PIC), wherein the photodetector is on the first PIC; and
a second PIC comprising the modulator, wherein the first PIC is different from the second PIC, wherein the DSP is electrically connected to the first PIC and the second PIC, optionally wherein the optical media converter further comprises a PIC, wherein the PIC comprises a first plurality of modulators and a second plurality of modulators, wherein the photodetector and a second photodetector are on the PIC, and wherein the DSP is electrically connected to the PIC.

15. A method performed in an optical media converter that comprises: a first port, a photodetector, a digital signal processor (DSP), a modulator, and a second port, the method comprising:
receiving at the first port a first optical signal with a first signal speed;
converting by the photodetector the first optical signal into first electrical signals;
modifying by the DSP the first electrical signals from the first signal speed to a second signal speed to produce modified electrical signals, wherein the first signal speed is different from the second signal speed;
converting by the modulator the modified electrical signals into a second optical signal with the second signal speed; and
transmitting by the second port the second optical signal out of the optical media converter.
